# EUROPEAN PATENT APPLICATION

(11) **EP 4 795 985 A1**
(43) Date of publication of application: **26.08.2026**
(21) Application number: 23955619.4
(22) Date of filing: 17.10.2023
(51) Int. Cl.: A47J 37/06

(54) **GRILL FOR COOKING PRESSED FOOD IN A MICROWAVE AND IMPINGEMENT OVEN**

(71) Applicant: Pratica Produtos S.A., 37.556-140 Pouso Alegre - MG (BR)
(72) Inventor: ROSA REZENDE, Luiz Eduardo, 37553659 Pouso Alegre (BR)
(74) Representative: Inchingalo, Simona
(86) International application number: PCT/BR2023/050355
(87) International publication number: WO 2025/081244

(57) **Abstract**

The present patent application discloses a grill for cooking pressed food, such as panini, in a microwave and impingement oven, pertaining to the field of baking trays, grills, and sandwich grills, and more particularly for use for cooking panini-type snacks in an oven; more specifically, it comprises a lower plate (2) and an upper grill (3), positioned parallel to, above and connected to the lower plate (2) by four arms (4), which enable the upper grill (3) to perform relative upward and downward movements, wherein the lower plate has supports (14, 15) for fitting it within the cooking chamber (26) of the oven (24).

## Description

### TECHNICAL FIELD

This patent application relates to a grill for cooking pressed foods, such as panini-type foods, in a microwave and impingement oven, pertaining to the field of baking trays, grills, and sandwich grills, and more particularly for use for cooking panini-type snacks in an oven.

A panini is a sandwich made preferably with Italian bread, using a hot-pressing technique on grills or sandwich grills, leaving the bread with grill marks.

More precisely, the object of this application comprises a grill specifically developed to be adapted, preferably, to a particular oven model already known in the state of the art, in order to add another function to it, however, without modifying the original characteristics and functionalities of the oven, so that it can be fitted, from the factory, to new ovens or installed in ovens acquired even before the development of the accessory in question. Furthermore, it can also be used in any oven model permitted by the state of the art.

Therefore, this is an accessory that allows the oven to operate in a traditional way and also to function as equipment for cooking paninis.

### State of the Art

In order to specify the state of the art, some patent documents dealing with equipment for cooking paninis and grills in general can be cited.

Patent document BR 22 2019 017573 5 U2, entitled " *DISPOSIÇÃO INTRODUZIDA EM SANDUICHEIRA"* (ARRANGEMENT INTRODUCED IN A SANDWICH MAKER) discloses a sandwich maker arrangement comprising: a housing comprising: a base; a hinged top cover; a hinge connecting the base; and a handle (not shown) projecting from the cover; said base and cover have respective upper and lower regions facing each other, on which are mounted respective upper and lower heated plates, between which the food to be heated is placed; the aforementioned sandwich maker also consists of a heating unit with parts housed in the base and lid, and an electrical power cable with a plug at its end. In this arrangement, the heating unit is an electromagnetic induction heating unit that heats ferromagnetic heat-exchanger plates, which exchange heat with the heated plates, and these with the food to be heated.

Patent document MU 8300952-3 U2, entitled " *DISPOSlÇÃO INTRODUZIDA EM SANDUICHEIRA COM SISTEMA DE PLACA E DEFLETOR PARA DISSIPACÃO DE CALOR* "(ARRANGEMENT INTRODUCED IN A SANDWICH MAKER WITH A PLATE AND DEFLECTOR SYSTEM FOR HEAT DISSIPATION), discloses an arrangement introduced in a sandwich maker-type household appliance where a particular arrangement of its metal parts is used, such as heating plates, deflectors, heat dissipators, and other parts, using engineering plastics for the casing or body of the sandwich maker, thus providing excellent handling performance, mechanical resistance, and low manufacturing cost in a household appliance whose total weight is therefore reduced.

US patent document 7514655B2, entitled "GRELHA DE PANNINI INCLINÁVEL"(*TILTING PANNINI COOKING GRILL),"* discloses an electric grill composed of a support structure that houses an upper heating section and a lower heating section connected by a hinge. The hinge allows for a wide range of movements, where the upper heating section can be facing the lower heating section, can be perpendicular, or can be at a 180-degree angle. Furthermore, the upper and lower heating sections can be tilted so that excess fat, oils, and liquids can be separated from the food being cooked. The electric grill disclosed here may also include a digital display and a user input keypad.

Patent document MU 8501389-7 U2, entitled "*DISPOSIÇÃO TÉCNICA INTRODUZIDA EM GRELHA DUPLA"* (TECHNICAL ARRANGEMENT INTRODUCED IN DOUBLE GRILLE), discloses an apparatus consisting of a perforated plate; angle bracket; hinges; cables; and a hook-shaped locking and closing system. It is noted that the double grille has two parts joined by a set of hinges, one of which has a bottom made of perforated plate framed with an angle bracket. It should be noted that on the edge opposite the one containing the hinges and two extensions used to support the double grill, there are two cables made of wood, polyethylene, PVC, or equivalent, positioned at opposite ends from each other. The second part is also provided with a perforated plate bottom framed with angler brackets, containing on its front a hook-shaped locking and closing system.

### Weak points of the state of the art

Patent documents BR 22 2019 017573 5 U2 *"Disposiçõo introduzida em sanduicheira"* (Arrangement introduced in a sandwich maker), MU 8300952-3 U2 *"Disposiçõo introduzida em sanduicheira com sistema de placa e defletor para dissipaçõo de calor"* (Arrangement introduced in a sandwich maker with a plate and deflector system for heat dissipation), and US7514655B2 *"Grelha panini inclinável "* (Tiltable panini cooking grill) disclose generic apparatus for cooking panini-type snacks or sandwiches, equipped with their own heating devices, whose main drawback lies in the fact that the plates that perform the pressing are not parallel when interleaving the food and do not present any similarity with the object of the present patent application.

In turn, the object shown in patent document MU 8501389-7 U2 *"Disposiçõo técnica introduzida em uma grelha dupla"* (Technical arrangement introduced in a double grill) was designed exclusively for barbecues, is not suitable for cooking panini-type snacks, and cannot be used in closed cooking chambers; it has no similarity to the object presented in this patent application, and only reflects the general state of the art.

Generic appliances for cooking pressed foods, such as paninis, or even ovens specifically designed for this purpose, have been around for some time. However, a generic appliance does not deliver the quality, uniformity, and speed required by a commercial establishment.

Ovens specifically designed for this type of cooking limit the preparation of other types of food, as their main focus is on cooking paninis.

It should be noted that the grill marks left on the food are important in the panini sandwich, which is why a grill that slopes in a parallel fashion was designed. This concern is not present in grills in the prior art.

### Proposed solution

The proposed solution consists of developing a grill that can be adapted to a specific oven model, already known in the state of the art, enabling it to cook paninis while maintaining its original functions.

Said oven comprises a professional cooking equipment, of the "ventless" type that dispenses with exhaust system, powered by electricity, whose heat sources are microwave radiation and impinged air, and has a horizontal rectangular prismatic structure of substantial depth, which in its front view is greater in height than in width. It has a rectangular prismatic cooking chamber, with a volume of approximately 13 liters, equipped with a front hinged door that opens from top to bottom.

Thus, this patent application is disclosed seeking to obtain a conveniently configured and arranged accessory to convert said oven into a hybrid cooking equipment, that is, capable of cooking pressed foods without the need for any other type of equipment, which can operate in a traditional way and, with the inclusion of the accessory described herein, will have the function of cooking panini. This applies to new ovens or to equipment purchased prior to the development of this accessory.

The panini cooking accessory, as presented, offers flexibility to the end user; that is, by using the panini cooking accessory, the oven provides the option of cooking this type of snack. In this way, the end user does not need a separate oven or equipment specifically for this purpose; the user can install the accessory themselves without any technical intervention, resulting in resource savings and increased productivity for the establishment and/or business.

The accessory is based on a mechanical design of aluminum and stainless steel parts specifically dimensioned for this purpose. Laser cutting machines and machining systems are used in its manufacture, making variations virtually nonexistent. After the mechanical parts are manufactured, the two main pieces (upper and lower plates) are coated with a non-stick layer to facilitate cooking and cleaning.

It is therefore understandable that the accessory in question is extremely simple in its construction, and therefore easy to manufacture; however, excellent practical and functional results are obtained, offering an innovative design compared to known products.

It is important to highlight that the microwave system generates disturbance in the electronic parts of the oven through the respective grill located inside the oven. Therefore, several studies have been conducted with the aim of minimizing this disturbance. Among the best grill design options, it was concluded that the diagonal shape is the most suitable for the device.

In turn, the design features two parallel grills, the first fixed at the bottom of the device and the second movable at the top. During preparation, the upper grill is pressed onto the food in a parallel fashion, and its temperature creates a mark in the grill pattern, characteristic of panini sandwiches.

These are important aspects of the present document, as it was conceived with an innovative design, resulting in a harmonious and practical whole, with a quite peculiar and, above all, characteristic appearance. In addition to its construction, the product stands out for its versatility and ease of use.

Brief description of the arrangement drawings [024] To complement the present description in order to obtain a better understanding of the characteristics of the present invention and in accordance with a preferred practical embodiment thereof, a set of drawings is attached to the description, where, in an exemplary, though not limiting, manner, the following is represented:

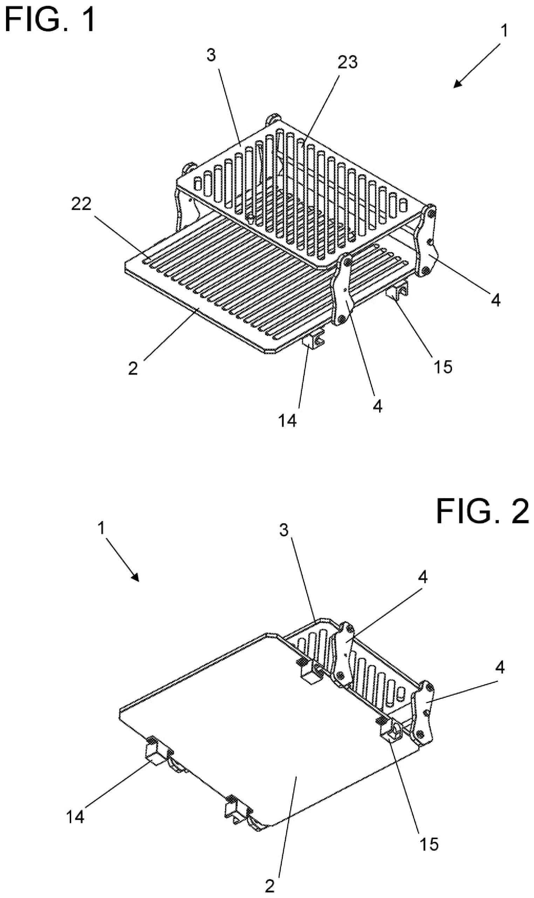

FIG. 1 - Shows a front perspective view of the cooking grill in the open position.
FIG. 2 - Shows a bottom perspective view of the cooking grill in the open position.

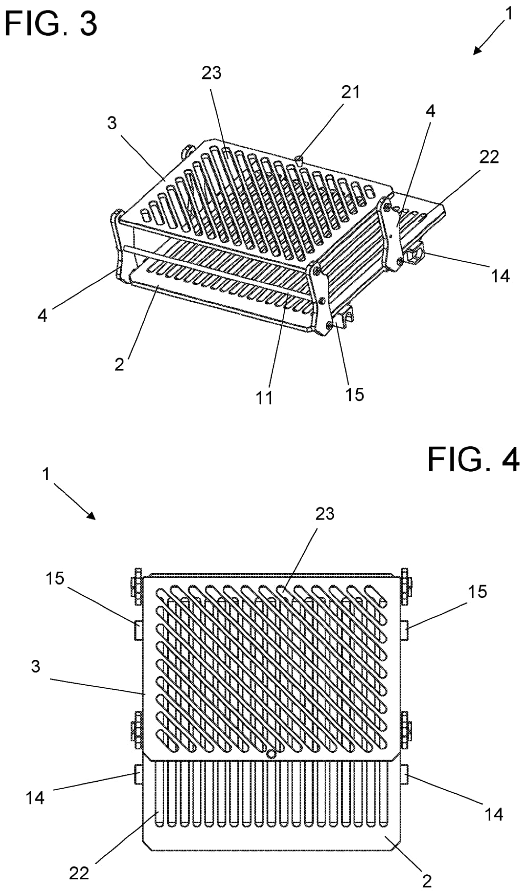

FIG. 3 - Shows a rear perspective view of the cooking grill in the open position.
FIG. 4 - Shows a top view of the cooking grill in the open position.

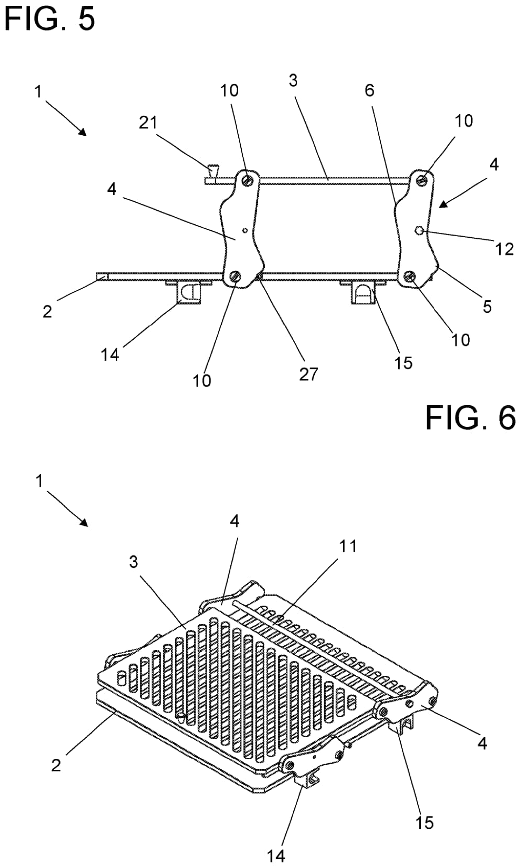

FIG. 5 - Shows a right side view of the cooking grill in the open position.
FIG. 6 - Shows a front perspective view of the cooking grill in the closed position.

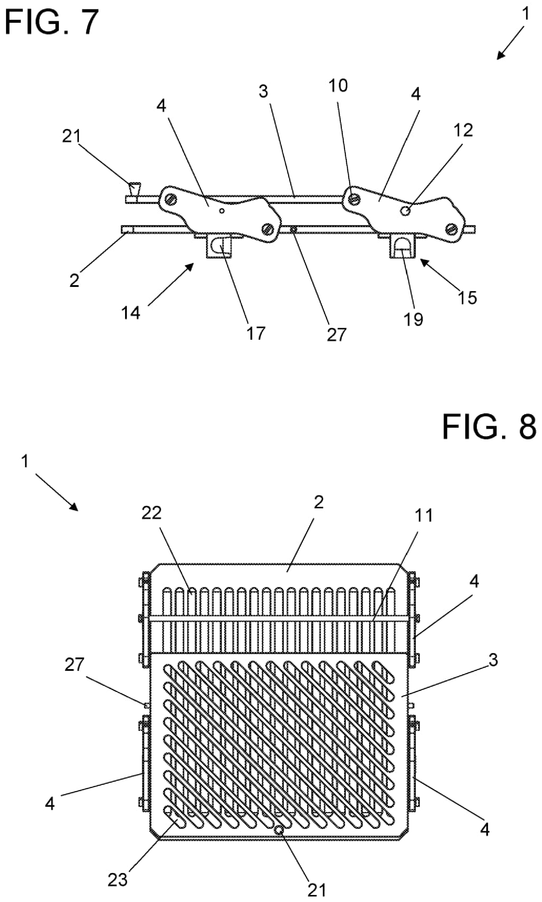

FIG. 7 - Shows a right side view of the cooking grill in the closed position.
FIG. 8 - Shows a top view of the cooking grill in the closed position.

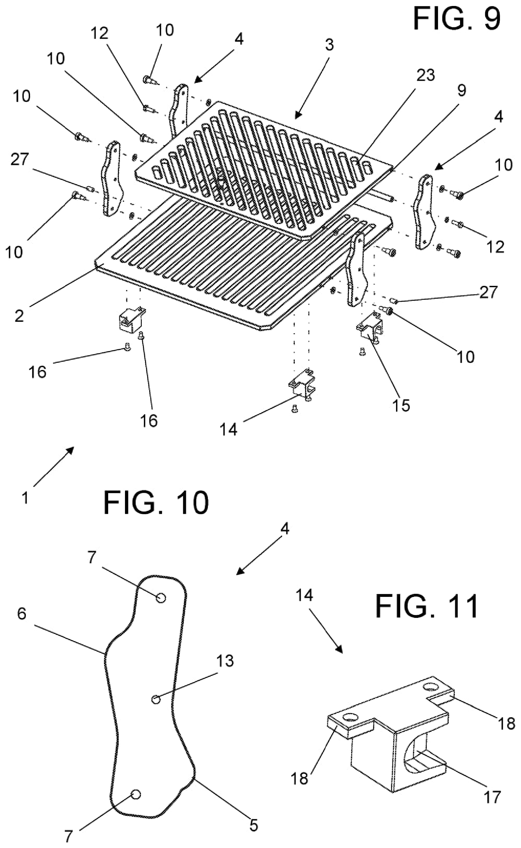

FIG. 9 - Shows an exploded perspective view of the cooking grill.
FIG. 10 - Shows a right side view of the articulated arm that joins the lower and upper plates.
FIG. 11 - Shows a perspective view of the front support.

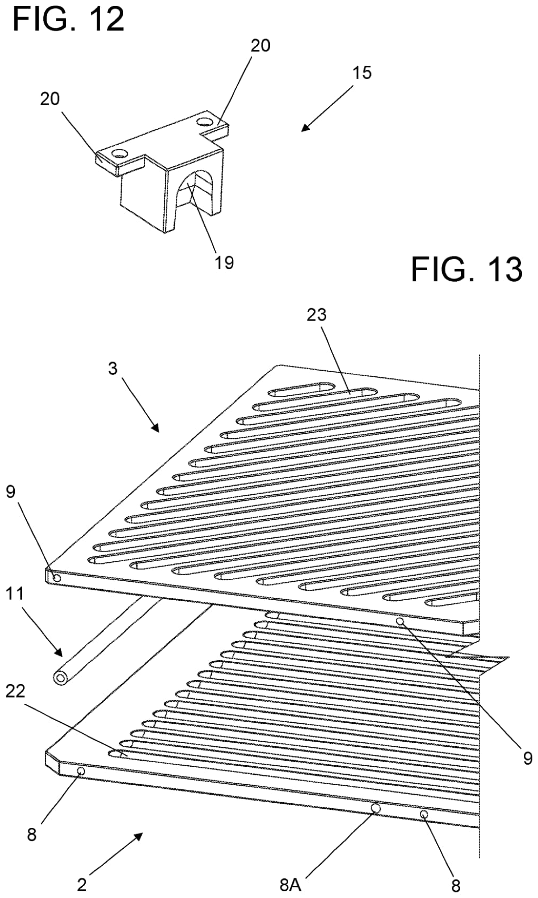

FIG. 12 - Shows a perspective view of the rear support.
FIG. 13 - Shows a perspective view of the detail of the lower plate, the reinforcing rod, and the upper grill.

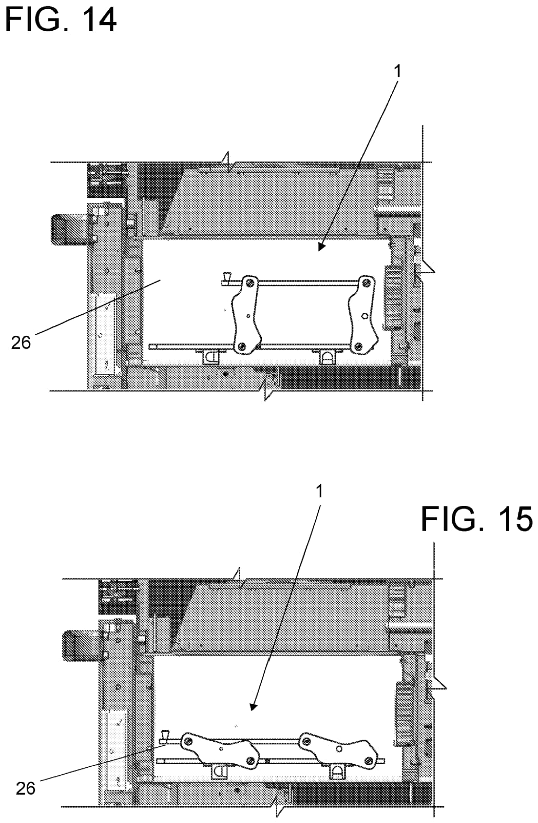

FIG. 14 - Shows a side view of the oven in section, detailing the cooking chamber, where the grill can be seen in the open position.
FIG. 15 - Shows a side view of the oven in section, detailing the cooking chamber, where the grill can be seen in the closed position.

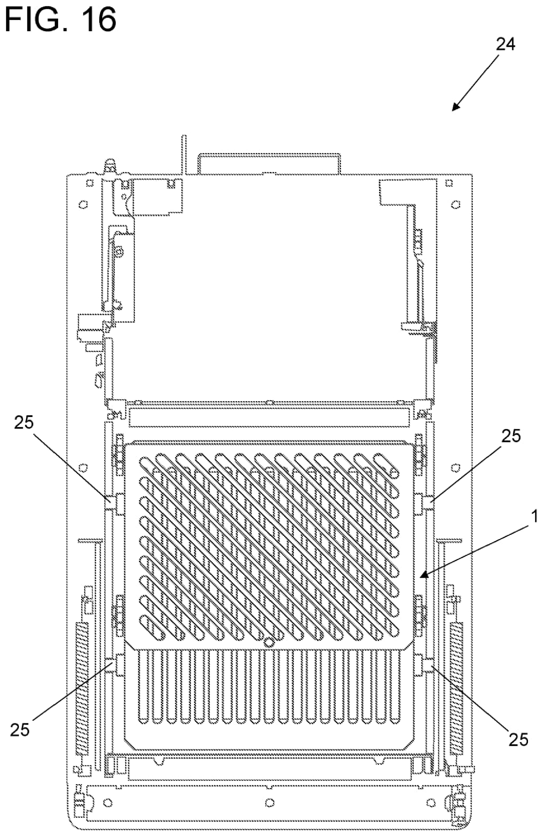

FIG. 16 - Shows a top view of the oven in section, detailing the cooking chamber, where the grill can be seen in the open position.

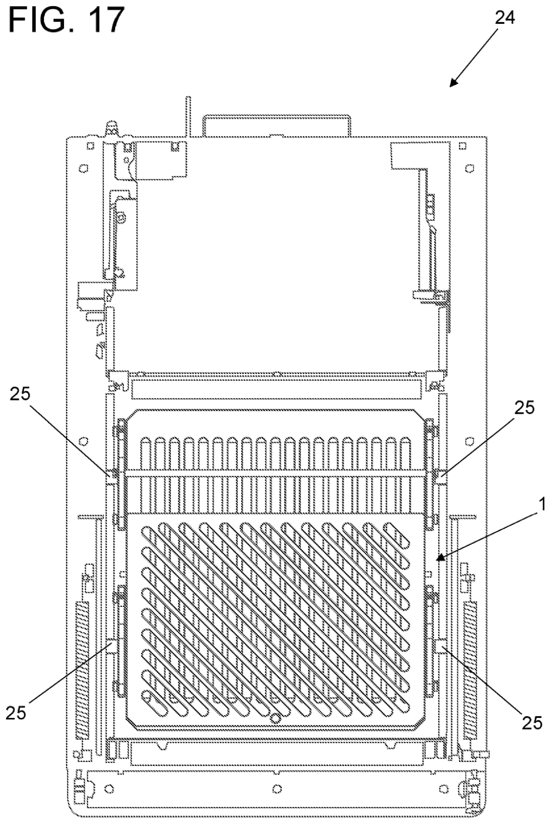

FIG. 17 - Shows a top view of the oven in section, detailing the cooking chamber, where the grill can be seen in the closed position.

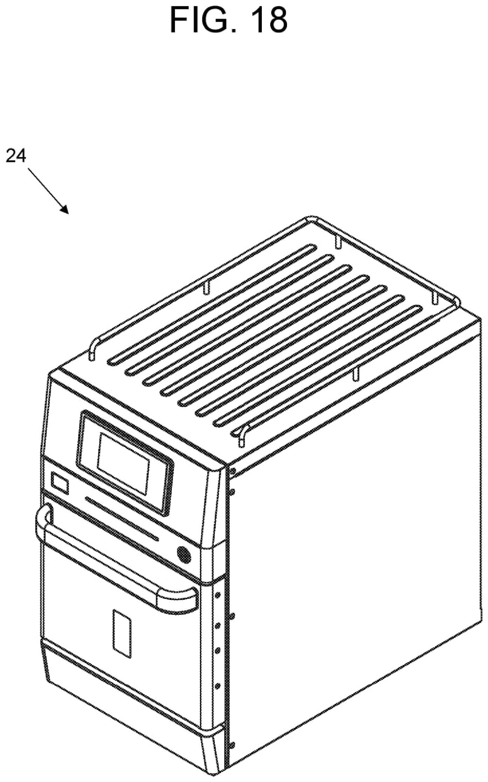

FIG. 18 - Shows a perspective view of a ventless microwave oven with impinged air, in which the cooking grill is adapted.

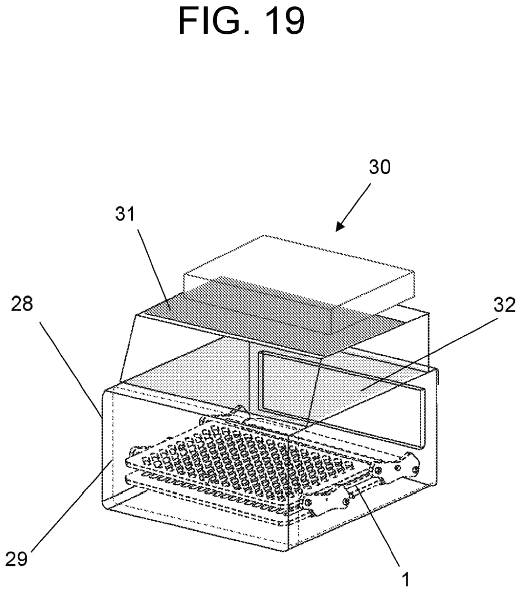

FIG. 19 - Shows a schematic view of the oven with the grill, subjected to the Voltage Standing Wave Ratio Test, where the cooking chamber is represented, comprising an external steel wall (28) 304 and an internal aluminum wall (29); aluminum guides (30); a mica plate (31) positioned below the guides and a thermal insulation plate (32) of the "Besthermo-F" type positioned above the cooking chamber.

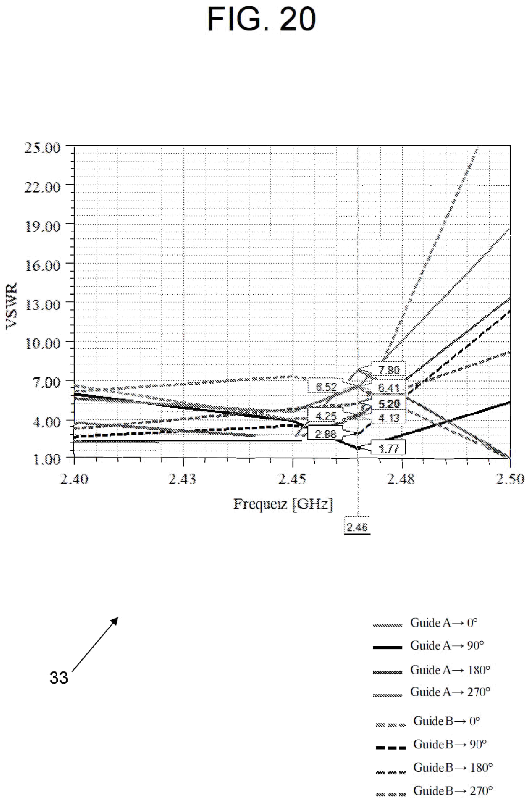

FIG. 20 - Shows the detail of the guides (30) where guide "B" can be seen to the left of guide "A".
FIG. 21 - Shows a Frequency X VSWR graph.

### Detailed description of the invention

The object of the present patent discloses an oven grill (1) comprising a horizontally planar lower plate (2) and a horizontally planar upper grill (3) positioned above in parallel.

The lower plate (2) has a smooth lower face and the upper face has a plurality of recessed linear grooves, which extend from the front face to the rear face, positioned in parallel.

In turn, the upper grill (3) consists of a flat rectangular plate, equipped with a plurality of parallel linear openings positioned diagonally.

The upper grill (3) is connected to the lower plate (2) by means of four arms (4), placed in pairs and positioned on the side faces.

In more detail, said arm (4) has an oblong shape, provided with an front shoulder (6) and a rear shoulder (5), which are located one on each longer side, close to the end, since next to each end of the arm (4) there is a circular hole (7). Said shoulders (5, 6) have the shape of a parabolic triangle.

The arms (4) are attached to the sides of the lower plate (2) and the upper grille (3) by means of screws (10) that pass through the holes (7) and are screwed into the respective holes (8, 9).

It is observed that the region next to the screw head (10) is smooth, thus, said arms (4) allow the upper grill (3) to be moved vertically, in both directions, in order to move it away from or closer to the lower plate (2), always maintaining parallelism with it. Its downward movement is limited by the front support, when the front arm (4) rests on it, and the upward movement is limited by the pin (27), when the rear shoulder (5) rests on it. Said pin (27) is screwed into the hole (8A) provided on the side face of the lower plate (2).

To ensure the stability of the apparatus, during the movement of the upper grill (3) a reinforcement rod (11) is provided, in a horizontal position, between the rear arms (4). The ends of said reinforcement rod (11) receive screws (12) that pass through the respective arms (4) through the holes (13).

On the underside of the lower plate (2), next to the side beads and in the front portion, two opposing front supports (14) are provided, and in the rear portion, two opposing rear supports (15) are provided, which are affixed to the lower plate (2) by screws (16).

Said front support (14) has a rectangular prismatic body equipped with a semi-elliptical cavity (17) with the opening facing backwards and two opposing tabs (18), with circular holes, positioned flush with the upper face, , one face facing forward and the other face facing backward.

Said rear support (15) has a rectangular prismatic body provided with a semi-elliptical cavity (19) with the opening facing downwards and two opposing tabs (20), with circular holes, positioned flush with the upper face, one face facing forward and the other face facing backward.

Finally, the upper grill (3) has a handle (21), of inverted truncated cone geometry, located next to the front bead and centered. Said handle (21) makes it possible to move the upper grill (3) relative to the grill, either manually or with the aid of an utensil when the grill is heated.

In order to fit the grill (1) in the oven (24), simply fit the transverse pins (25), provided in the cooking chamber (26), into the cavities (17, 19) of the front supports (14) and rear supports (15), respectively.

Upper grills with openings at different angles were considered in the design, however the tests relating to the Voltage Standing Wave Ratio (VSWR) led the inventor to opt for the upper grills (3) with a diagonal opening (23), as it presented better parameters.

Below is the table (T1) with the "VSWR" values for a frequency of 2.46 GHz, relative to grill (1), obtained in a numerical test, whose graph is shown in figure 21.

**Table (T1)**

| Angle | VSWRA | VSWRB |
|---|---|---|
| O° | 6.52 | 4.13 |
| 90° | 1.77 | 2.88 |
| 180° | 4.25 | 5.20 |
| 270° | 7.80 | 6.41 |

It is understood that when the present invention is implemented into practice, modifications may be introduced with regard to certain details of construction and form, without departing from the fundamental principles that are clearly substantiated in the claims, it being understood that the terminology used was for descriptive purposes and not for limitation.

## Claims

**1.** A GRILL FOR COOKING PRESSED FOOD IN A MICROWAVE AND IMPINGEMENT OVEN, said grill being an oven grill (1) comprising a horizontally planar lower plate (2) and a horizontally planar upper grill (3), which is positioned above in parallel, the lower plate (2) having a smooth lower face and the upper face having a plurality of parallel recessed linear grooves (22) extending from the front face to the rear face, **characterized by** being a press that is placed inside the oven for food preparation, designed to apply pressure to both the top and bottom sides, resulting in distinct grill marks on its surface during the food preparation process, without causing any disturbance to the oven's electronic components.

**2.** THE GRILL FOR COOKING PRESSED FOOD IN A MICROWAVE AND IMPINGEMENT OVEN , said grill being an oven grill (1) comprising a horizontally planar lower plate (2) and a horizontally planar upper grill (3), which is positioned above in parallel, the lower plate (2) having a smooth lower face and the upper face having a plurality of parallel recessed linear grooves (22) extending from the front face to the rear face, according to claim 1, **characterized by** the upper part of the press being arranged parallel to the lower part by means of stabilizing bars placed at the rear of said grill.

**3.** THE GRILL FOR COOKING PRESSED FOOD IN A MICROWAVE AND IMPINGEMENT OVEN according to claim 1 **characterized in that the** upper grill (3) is made up of a flat rectangular plate, provided with a plurality of parallel linear openings (23) positioned diagonally.

**4.** THE GRILL FOR COOKING PRESSED FOOD IN A MICROWAVE AND IMPINGEMENT OVEN , said grill being an oven grill (1) comprising a horizontally planar lower plate (2) and a horizontally planar upper grill (3), which is positioned above in parallel, the lower plate (2) having a smooth lower face and the upper face having a plurality of parallel recessed linear grooves (22) extending from the front face to the rear face, according to claim 1, **characterized by** the fact that the upper grill (3) is interconnected to the lower plate (2) by means of four arms (4), placed in pairs and positioned on the side faces, said arm (4) having an oblong shape, provided with a rear shoulder (5) and a front shoulder (6), which are located one on each longer side, close to the end, since next to each end of the arm (4) there is a circular hole (7), wherein the said shoulders (5, 6) have the shape of a parabolic triangle; said arms (4) are affixed to the sides of the lower plate (2) and the upper grill (3) by means of screws (10), whose regions near the heads are smooth, which pass through the holes (7) and are screwed into the respective holes (8, 9), wherein the rear arms (4) interpose a horizontal reinforcement rod (11), whose ends receive screws (12), which pass through the respective arms (4) through the holes (13); wherein near the front arm (4) there is a pin (27) screwed into the hole (8A) provided in the side face of the lower plate (2); since on the face facing down of the lower plate (2), next to the side beads and in the front portion there are two opposing front supports (14), and in the rear portion there are two opposing rear supports (15), which are fixed to the lower plate (2) by screws (16); wherein said front support (14) has a rectangular prismatic body provided with a semi-elliptical cavity (17) with the opening facing backwards and two opposing tabs (18), with circular holes, positioned flush with the upper face, wherein one is facing forward and the other backward, said rear support (15) has a rectangular prismatic body provided with a semi-elliptical cavity (19) with the opening facing downward and two opposing tabs (20), with circular holes, positioned flush with the upper face, wherein one face is facing forward and the other face is facing backward; finally, the upper grill (3) has a handle (21), that has an inverted truncated cone geometry, located next to the front bead and aligned to the center.

**1.** A GRILL FOR COOKING PRESSED FOOD IN A MICROWAVE AND IMPINGEMENT OVEN, said grill being an oven grill (1) comprising two flat plates called "grills", a lower grill (2) and an upper grill (3) exclusively for cooking snacks called Panin, **characterized by** intentionally creating grill marks on both surfaces of the food, caused by localized heat transfer in the contact areas, resulting in characteristic darkened lines or patterns, developed for use in an oven where the heat source comprises microwave radiation and impinged air, containing the upper grill (3) with diagonal openings at 45° angles.

**2.** THE GRILL FOR COOKING PRESSED FOOD IN A MICROWAVE AND IMPINGEMENT OVEN, said grill being an oven grill (1) comprising two flat plates called "grills", a lower grill (2) and an upper grill (3) exclusively for cooking snacks called Panini, according to claim 1, **characterized by** being a device that converts said oven into a hybrid cooking equipment capable of preceding the cooking of pressed foods.

**3.** THE GRILL FOR COOKING PRESSED FOOD IN A MICROWAVE AND IMPINGEMENT OVEN, said grill being an oven grill (1) comprising two flat plates referred to as "grills", a lower grill (2) and an upper grill (3) exclusively for cooking snacks called Panini, according to claim 1, **characterized by** the upper part of the grill being arranged parallel to the lower part by means of stabilizing bars placed on the back of said grill comprising four arms (4) attached to the sides of the lower (2) and upper (3) grill allowing the upward or downward movement to be performed parallel to the base of the lower grill (2).

**4.** THE GRILL FOR COOKING PRESSED FOOD IN A MICROWAVE AND IMPINGEMENT OVEN, said grill being an oven grill (1) comprising two flat plates referred to as "grills", a lower grill (2) and an upper grill (3) exclusively for cooking snacks called Panini, according to claim 1, **characterized by** the upper grill (3) having a handle (21), with an inverted truncated cone geometry, located on the front bead and centered, thus enabling the movement of the upper grill (3), manually or with an instrument when the grill is heated.

**5.** THE GRILL FOR COOKING PRESSED FOOD IN A MICROWAVE AND IMPINGEMENT OVEN, said grill being an oven grill (1) comprising two flat plates referred to as "grills", a lower grill (2) and an upper grill (3) exclusively for cooking snacks called Panini, according to claim 1, **characterized by** the fact that the upper grill (3) is interconnected to the lower plate (2) by means of four arms (4), opposed two by two and positioned on the side faces, said arm (4) having an oblong shape, provided with a rear shoulder (5) and a front shoulder (6), which are located one on each larger side, close to the end, since next to each end of the arm (4) there is a circular hole (7), wherein the said shoulder (5, 6) have the shape of a parabolic triangle; said arms (4) are attached to the sides of the lower plate (2) and the upper grill (3) by means of screws (10), whose regions near the heads are smooth, which pass through the holes (7) and are screwed into the respective holes (8, 9), wherein the rear arms (4) interpose a horizontal reinforcement rod (11), whose ends receive screws (12), which pass through the respective arms (4) through the holes (13); whereby near the front arm (4) there is a pin (27) screwed into the hole (8A) provided in the side face of the lower plate (2); since on the face facing down of the lower plate (2), next to the side beads and in the front portion there are two opposing front supports (14), and in the rear portion there are two opposing rear supports (15), which are attached to the lower plate (2) by screws (16); wherein said front support (14) has a rectangular prismatic body provided with a semi-elliptical cavity (17) with the opening facing backwards and two opposing tabs (18), with circular holes, positioned flush with the upper face, wherein one is facing forward and the other backward, said rear support (15) comprising a rectangular prismatic body provided with a semi-elliptical cavity (19) with the opening facing downward and two opposing tabs (20), with circular holes, positioned flush with the upper face, wherein one is facing forward and the other facing backward; the upper grill (3) having a handle (21) with an inverted truncated cone geometry, located next to the front bead and aligned to the center.
